# EUROPÄISCHE PATENTSCHRIFT

(11) **EP 1 450 084 B1**
(45) Veröffentlichungstag und Bekanntmachung des Hinweises auf die Patenterteilung: **24.05.2006**
(21) Anmeldenummer: 03028709.8
(22) Anmeldetag: 12.12.2003
(51) Int. Cl.: F16K 11/065, F16K 27/04

(54) **Schieberventil**
Sliding valve
Vanne à tiroir

(30) Priorität: 20.02.2003 DE 10307313
(43) Veröffentlichungstag der Anmeldung: 25.08.2004
(73) Patentinhaber: Otto Egelhof GmbH & Co. KG, 70736 Fellbach (DE)
(72) Erfinder: Winterstein, Ralf, 72581 Dettingen/Erms (DE); Robin, Jean-Jacques, 71364 Winnenden (DE); Köstler, Hans, 73635 Rudersberg (DE)
(74) Vertreter: Manitz, Finsterwald & Partner GbR

(56) Entgegenhaltungen:
- EP-A- 0 361 183
- EP-A- 0 392 383
- DE-A- 3 733 890
- DE-A- 4 235 262
- DE-C- 10 033 351
- US-A- 5 110 630

## Beschreibung

Die vorliegende Erfindung betrifft ein Schieberventil, insbesondere für einen Kälte- und/oder Wärmekreislauf, mit einem Ventilgehäuse mit Wänden, die mindestens eine Fluideintrittsöffnung und mindestens eine Fluid-austrittsöffnung aufweisen, sowie mit einem Schieber zum zeitweisen Verschließen mindestens einer der Öffnungen, wobei zwischen Schieber und die zu verschließende Öffnung aufweisender Gehäusewand eine mindestens eine Durchflussöffnung für das Fluid aufweisende Platte aus reibungsarmem Material oder mit einer dem Schieber zugewandten reibungsarmen Oberfläche angeordnet ist.

Ein Schieberventil mit den im Oberbegriff von Anspruch 1definierten Merkmalen ist aus der DE-C-100 33 351 bekannt. Schieberventile an sich sind in vielfältiger Weise bekannt und sind beispielsweise als 2/2-, 3/2-, 4/3- oder auch 4/2-Wegeventil eingesetzt, um Fluidanschlüsse wahlweise miteinander zu verbinden oder auch nur einen Durchfluss zeitweise zu sperren. Der Schieber kann dabei geradlinig oder rotatorisch bewegt sein.

Der Erfindung liegt die Aufgabe zugrunde, ein Schieberventil der eingangs genannten Art anzugeben, welches in der Herstellung vereinfacht und in der Wirkung verbessert ist. Unter anderem soll eine möglichst geringe Reibung bei der Bewegung des Schiebers mit einer günstigen Herstellung verbunden sein.

Diese Aufgabe wird durch ein Schieberventil gemäß Anspruch 1 gelöst.

Die Verwendung einer Platte aus reibungsarmem Material oder mit einer reibungsarmen Oberfläche hat den Vorteil, dass die Reibung beim Bewegen des Schiebers deutlich herabgesetzt werden kann. Dabei ist es von der Herstellung her günstig, dass nicht das Gehäuse selbst reibungsarm ausgebildet oder mit einer reibungsarmen Oberfläche versehen werden muss. Stattdessen kann das Gehäuse in üblicher Weise aus Edelstahl oder einem sonstigen Material hergestellt und muss lediglich mit einer entsprechenden Aufnahme für die Schieberplatte versehen werden.

Als besonders geeignetes Material für die Schieberplatte und den Schieber hat sich Keramik herausgestellt. Damit können besonders niedrige Reibwerte erzielt sowie gleichzeitig eine gute Ventilfunktion gewährleistet werden. Auch die Wärmeleitung ist bei Keramik vorteilhafter Weise gering.

Nach einer bevorzugten Ausgestaltung der Erfindung sind Mittel vorgesehen, durch welche der Schieber, insbesondere elastisch, gegen die Schieberplatte gedrängt wird. Damit wird eine sichere Anlage des Schiebers an der Platte und eine gute Abdichtung gewährleistet, und zwar unabhängig von der Einbaulage des Ventils.

Nach der Erfindung ist die Schieberplatte im Ventilgehäuse in der Plattenebene im Wesentlichen kräftefrei gehalten, indem die Platte allein durch Mittel im Gehäuse gehalten ist, welche die Platte, insbesondere elastisch, gegen die Innenseite der die zu verschließende Öffnung aufweisenden Wand des Ventilgehäuses drängen. Durch diese quasi schwimmende Halterung der Schieberplatte im Ventilgehäuse werden Druck- und insbesondere Zugbeanspruchungen in der Platte weitgehend vermieden. Dies ist insbesondere bei Keramikplatten wichtig, um eine Beschädigung oder Zerstörung der Platte zu vermeiden. Derartige Spannungen können insbesondere dann auftreten, wenn Fluide mit unterschiedlicher Temperatur das Ventil passieren müssen.

Um die innere Dichtheit des Ventils zu gewährleisten, ist nach einer weiteren Ausgestaltung der Erfindung zwischen der Schieberplatte und der Innenseite der die zu verschließende Öffnung aufweisenden Wand des Gehäuses eine Dichtung angeordnet. Hierbei kann es sich insbesondere um eine metallische Dichtung handeln. Es hat sich überraschenderweise gezeigt, dass mit einer metallischen Dichtung auch bei Verwendung einer Keramikplatte eine gute Dichtheit erzielt werden kann.

Bevorzugt ist die Dichtung als Dichtungsplatte mit Sicken ausgebildet. Durch die Sicken wird die Anlagefläche verringert, so dass die Flächenkraft erhöht und somit die Dichtwirkung verbessert ist. Besonders bevorzugt sind die Sicken mit einer Beschichtung aus elastischem Dichtmaterial, insbesondere Gummi versehen. Durch eine solche Beschichtung kann auch die Oberflächenrauheit der jeweiligen Materialien ausgeglichen und dadurch die Dichtwirkung weiter verbessert werden.

Das Ventilgehäuse ist insbesondere geteilt ausgebildet, und zwar indem das Gehäuse im Bereich der zu verschließenden Öffnung quer zur Durchflussrichtung geteilt ist. Damit kann eine einfachere Herstellung des Ventils erreicht werden, insbesondere, wenn das Gehäuse nach einer weiteren Ausgestaltung der Erfindung insgesamt nur zwei Teile umfasst.

Besonders bevorzugt ist es, wenn zur Abdichtung der beiden Hälften gegeneinander und zur Abdichtung der Schieberplatte gegen das Ventilgehäuse eine gemeinsame Dichtung vorgesehen ist. Damit kann der Herstellungsaufwand verringert werden.

Nach einer weiteren Ausgestaltung der Erfindung weist der Schieber auf seiner der Schieberplatte zugewandten Seite mindestens eine Aushöhlung auf. Die Masse des Schiebers kann dadurch verringert werden. Zugleich erhöht sich die Flächenkraft, mit welcher der Schieber auf die Platte gedrängt wird. Damit verbessert sich auch die Dichtwirkung des Schieberventils. Außerdem kann die Aushöhlung als Verbindungskanal zwischen zwei Anschlüssen des Ventils eingesetzt werden.

Nach noch einer bevorzugten Ausgestaltung der Erfindung ist der Schieber in Draufsicht U-förmig ausgebildet. Auch hierdurch kann Material eingespart werden, so dass sich die Flächenkraft erhöht und die Masse verringert.

Der Schieber ist insbesondere über einen Magneten oder einen Elektromotor betätigbar. Dabei wirkt auf den Schieber bevorzugt eine Rückstelleinrichtung, welche den Schieber in seine Ausgangsstellung drängt. Die beiden Endstellungen des Schiebers sind bevorzugt durch Anschläge begrenzt.

Der Schieber kann nach einer Ausgestaltung der Erfindung über einen als Gewindestange ausgebildeten Stößel betätigbar sein. Die zugeordnete Gewindebohrung ist dann bevorzugt im Schieber selbst vorgesehen, wodurch separate Teile, wie beispielsweise eine Gewindebuchse eingespart werden können.

Nach noch einer Ausgestaltung der Erfindung sind die Durchflussöffnungen in der Schieberplatte mindestens zum Teil in Schieberichtung schmal ausgebildet. Der erforderliche Hub des Schiebers kann dadurch verringert werden.

Nicht beschränkende Ausführungsbeispiele der Erfindung sind in der Zeichnung dargestellt und werden nachfolgend beschrieben. Es zeigen, jeweils in schematischer Darstellung,
- Fig. 1: einen Schnitt durch ein 3/2-Wegeventil,
- Fig. 2: einen Schnitt gemäß Linie A-A in Fig. 1,
- Fig.3: eine Draufsicht auf die Oberseite des Ventils von Fig. 1,
- Fig. 4: einen Schnitt durch ein 4/3-Wegeventil,
- Fig. 5: einen Schnitt gemäß Linie B-B in Fig. 4,
- Fig. 6: eine Draufsicht auf die Oberseite des Ventils von Fig. 4,
- Fig. 7: eine teilweise geschnittene Darstellung eines erfindungsgemäßen 4/2-Wegeventils,
- Fig. 8: eine um 90° gedrehte, teilweise geschnittene Ansicht des Ventils von Fig. 7,
- Fig. 9: eine teilweise geschnittene Draufsicht auf die Oberseite des Ventils von Fig. 7,
- Fig. 10: eine Draufsicht auf eine in der Erfindung verwendete Dichtplatte und
- Fig. 11: einen Schnitt durch die Dichtplatte von Fig. 10 gemäß Linie C-C.

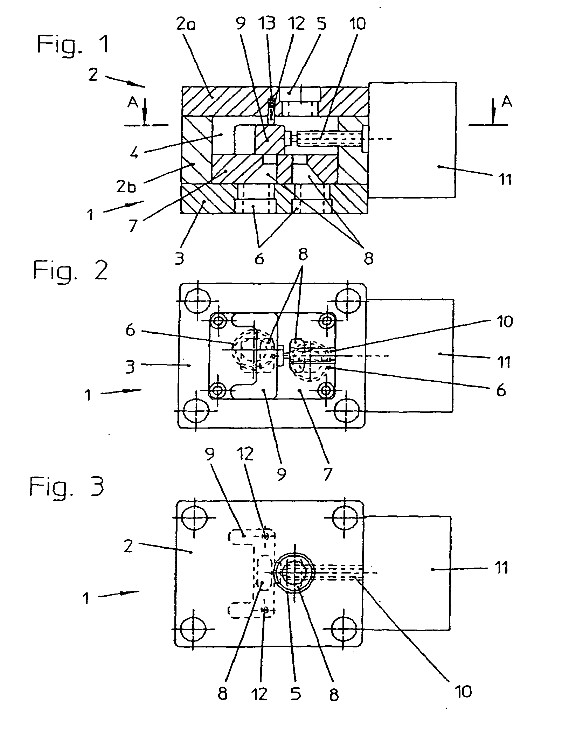

Das in den Fig. 1 bis 3 dargestellte 3/2-Wegeventil umfasst ein Gehäuse 1 mit einem aus zwei Teilen a und b bestehenden Gehäuseoberteil 2 und einem Gehäusedeckel 3. Das Gehäuse 1 umschließt einen Raum 4, der mit einer das Gehäuseoberteil 2 durchsetzenden Zugangsöffnung 5 und zwei den Gehäusedeckel 3 durchsetzenden Abgangsöffnungen 6 verbunden ist.

In dem Innenraum 4 ist eine Schieberplatte 7 angeordnet, die zwei Durchflussöffnungen 8 aufweist, die jeweils mit einer der beiden Abgangsöffnungen 6 in Verbindung stehen. Auf der Schieberplatte 7 ist ein Schieber 9 angeordnet, der über einen Stößel 10 von einem Motor 11 auf der Schieberplatte 7 hin und her verschiebbar ist.

Der Schieber 9 weist in Draufsicht die Form eines U auf und wird durch zwei in das Gehäuseoberteil 2 eingesetzte Druckstifte 12 in Richtung auf die Schieberplatte 7 gedrängt. Die Druckstifte 12 sind hierfür durch zwischen diese und das Gehäuseoberteil 2 eingesetzte Druckfedern 13 belastet. Die Druckstifte 12 greifen jeweils im Bereich der Schenkel des U-förmigen Schiebers 9 an. Der Schieber 9 ist zwischen einer ersten Stellung, in welcher er die in der Zeichnung links dargestellte Durchflussöffnung 8 der Schieberplatte 7 versperrt, und einer zweiten Stellung, in welcher er die in der Zeichnung rechts dargestellte Durchflussöffnung 8 der Schieberplatte 7 versperrt, durch den Motor 11 verschiebbar.

Durch Verschieben des Schiebers 9 zwischen seiner ersten und seiner zweiten Stellung kann wahlweise eine Verbindung zwischen der Zugangsöffnung 5 und einer der beiden Abgangsöffnungen 6 hergestellt werden. Der Schieber 9 verschließt hierfür jeweils eine der beiden Durchflussöffnungen 8 in der Schieberplatte 7, so dass das durch die Zugangsöffnung 5 eintretende Fluid nur über die andere Durchflussöffnung 8 der Schieberplatte 7 fließen und in die zugehörige Abgangsöffnung 6 gelangen kann. Durch die Druckstifte 12 wird dabei sichergestellt, dass der Schieber 9 dichtend auf der Schieberplatte 7 aufliegt, und zwar unabhängig von der Einbaulage des Ventils.

Um eine möglichst geringe Reibung zwischen Schieber 9 und Schieberplatte 7 zu gewährleisten, sind diese beiden Elemente aus einem reibungsarmen Material hergestellt, insbesondere aus Keramik. Um Spannungen in der Keramikplatte 7, insbesondere Zugspannungen, zu vermeiden, ist die Schieberplatte 7 so ausgebildet, dass sie bezüglich ihrer Schmalseiten ringsum zur gegenüberliegenden Innenwand des Gehäuses 1 einen Abstand aufweist, der eine unterschiedliche Wärmedehnung von Gehäuse 1 und Schieberplatte 7 ungehindert zulässt.

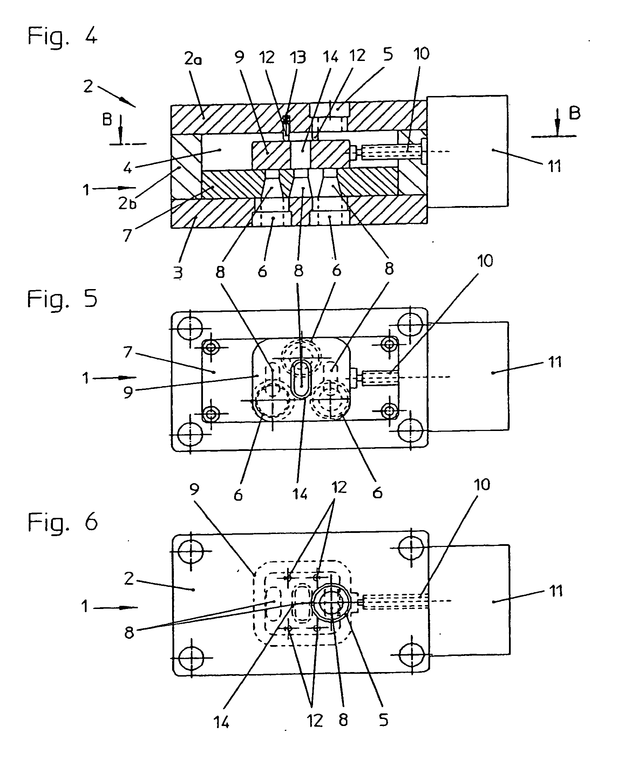

Das in den Fig. 4 bis 6 dargestellte 4/3-Wegeventil weist denselben prinzipiellen Aufbau auf wie das 3/2-Wegeventil der Fig. 1 bis 3. Insbesondere umfasst das Ventil auch hier ein Gehäuse 1 mit einem zweiteiligen Gehäuseoberteil 2 und einem Gehäusedeckel 3, welches einen Innenraum 4 umschließt. Der Innenraum 4 steht in Verbindung mit einer durch das Gehäuseoberteil geführten Zugangsöffnung 5 sowie drei durch den Gehäusedeckel 3 geführten Abgangsöffnungen 6.

In dem Innenraum 4 ist wiederum eine Schieberplatte 7 angeordnet, welche mit Durchflussöffnungen 8 versehen ist, die jeweils mit einer Abgangsöffnung 6 in Verbindung stehen. Auf der Schieberplatte 7 ist ein Schieber 9 angeordnet, der über einen Stößel 10 von einem Elektromotor 11 betätigbar ist.

Bei dieser Variante weist der Schieber 9 eine im Wesentlichen rechteckige Form auf und ist in der Mitte mit einer als Langloch ausgebildeten Durchflussöffnung 14 versehen. Außerdem sind hier insgesamt vier von Druckfedern 13 belastete Druckstifte 12 vorgesehen, durch welche der Schieber 9 auf die Schieberplatte 7 gedrückt wird. Beidseits der Durchflussöffnung 14 könnte der Schieber 9 auch mit zur Schieberplatte 7 offenen Aushöhlungen versehen sein.

Wie man insbesondere in Fig. 5 erkennt, sind die Abgangsöffnungen 6 in den Ecken eines gleichseitigen Dreiecks angeordnet, und ist die Durchflussöffnung 14 des Schiebers 9 so ausgebildet und angeordnet, dass drei Stellungen des Schiebers 9 definiert sind, in denen die Durchflussöffnung 14 des Schiebers 9 mit einer Durchflussöffnung 8 der Schieberplatte 7 in Verbindung steht. Die beiden anderen Durchflussöffnungen 8 der Schieberplatte 7 werden dabei jeweils vom Schieber 9 verschlossen. Die Durchflussöffnungen 8 sind an ihrem dem Schieber 7 zugewandten Ende in der Form eines Langloches ausgebildet und erweitern sich in Richtung auf ihr den Abgangsöffnungen 6 zugewandtes Ende zu einer kreisförmigen Öffnung. Hierdurch kann wahlweise eine Verbindung der Zugangsöffnung 5 mit einer der drei Abgangsöffnungen 6 des Schieberventils hergestellt werden.

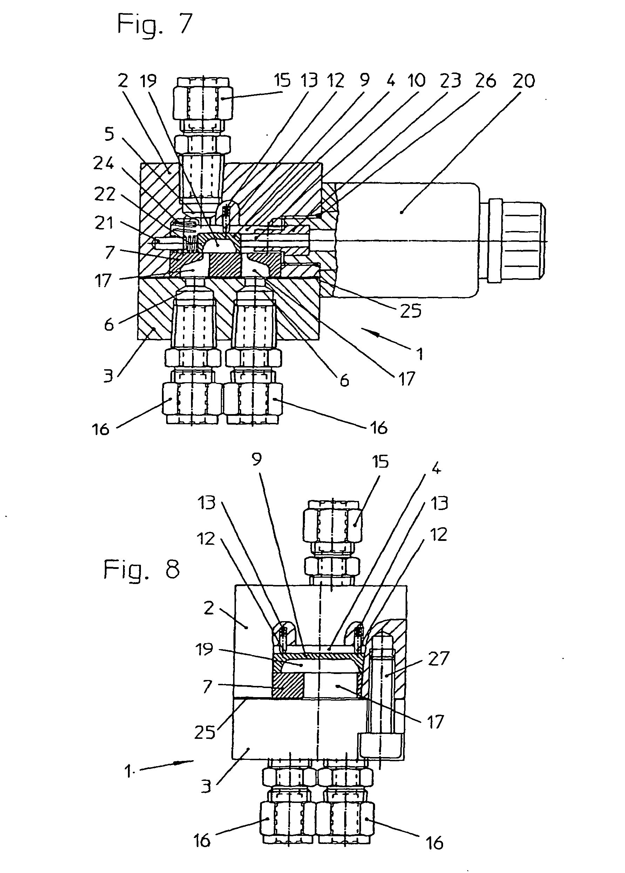

Das in den Fig. 7 bis 9 dargestellte 4/2-Wegeventil weist ebenfalls wieder denselben Grundaufbau wie die beiden zuvor beschriebenen Ventile auf. Ein Gehäuse 1 mit Gehäuseoberteil 2 und Gehäusedeckel 3 umschließt einen Innenraum 4, in welchem eine Schieberplatte 7 angeordnet ist, auf der ein Schieber 9 verschiebbar ist. Das Gehäuseoberteil 2, das bei dieser Variante einteilig ausgebildet ist, weist eine Zugangsöffnung 5 auf, die mit dem Innenraum 4 verbunden ist, und in welche ein Rohranschlussstück 15 eingesetzt ist. Der Gehäusedeckel 3 weist drei in den Ecken eines Dreiecks angeordnete Abgangsöffnungen 6 auf, die mit dem Innenraum 4 verbunden sind und in welche jeweils ein Rohranschlussstück 16 eingesetzt ist.

Die Schieberplatte 7 weist bei dieser Variante drei Durchflussöffnungen 17, 18 auf, die jeweils an ihrem dem Schieber 9 zugewandten Ende die Form eines Langlochs aufweisen, wobei sich die Langlöcher parallel zueinander erstrecken. Die langlochförmig ausgebildeten Enden zweier Durchflussöffnungen 17 sind beidseits des langlochförmigen Endes der dritten Durchflussöffnung 18 angeordnet und länger sowie schmaler als dieses. Zu ihrem den Abgangsöffnungen 6 zugewandten Ende hin erweitern sich die Durchflussöffnungen 17, 18 wieder zu einem kreisförmigen Querschnitt.

Der Schieber 9 ist auch bei dieser Variante im Wesentlichen rechteckförmig ausgebildet, weist jedoch auf seiner der Schieberplatte 7 zugewandten Seite eine Aushöhlung 19 auf, die derart ausgebildet ist, dass zwei Stellungen des Schiebers 9 definiert sind, in denen die Aushöhlung 19 einen Verbindungskanal zwischen der mittleren Durchflussöffnung 18 und jeweils einer der beiden äußeren Durchflussöffnungen 17 der Schieberplatte 7 bildet. Der Schieber 9 wird bei dieser Variante über einen Stößel 10 von einem Elektromagneten 20 betätigt. Der Schieber 9 ist dabei entgegen der Ausfahrrichtung des Stößels 10 durch eine auf einem Federhaltestift 21 angeordnete Druckfeder 22 belastet, die sich andererseits am Gehäuseoberteil 2 abstützt. Der Federhaltestift 21 bildet zugleich einen Anschlag für den Schieber 9 in seiner in Fig. 7 links dargestellten Endstellung. Die andere Endstellung des Schiebers 9 wird durch eine Buchse 23 festgelegt, die den Stößel 10 umgreift und am Elektromagneten 20 fixiert ist.

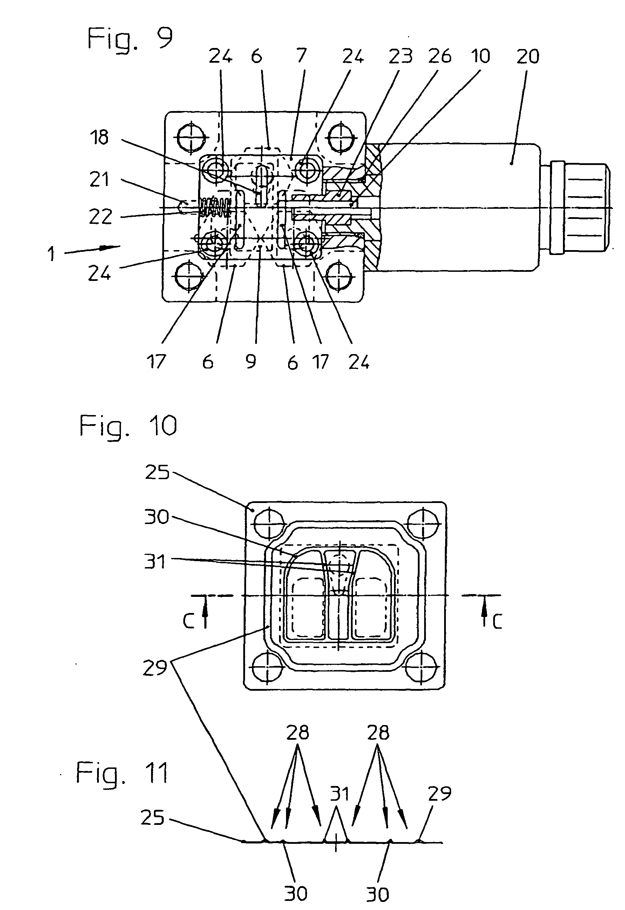

Der Schieber 9 wird auch bei dieser Variante durch zwei Druckstifte 12 gegen die Schieberplatte 7 gedrückt, wobei die Druckstifte 12 im Gehäuseoberteil 2 gelagert und durch zwei Druckfedern 13 in Richtung auf den Schieber 9 belastet sind. Zusätzlich sind vier weitere Druckfedern 24 vorgesehen, die zwischen Gehäuseoberteil 2 und Schieberplatte 7 eingespannt sind. Die Druckfedern 24 greifen in den vier Eckbereichen der Schieberplatte 7 an und drücken diese in Richtung auf eine zwischen Gehäuseoberteil 2 und Gehäusedeckel 3 eingesetzte Dichtungsplatte 25. Diese Dichtungsplatte 25 ist als Abdichtung der beiden Gehäusehälften 2, 3 gegeneinander sowie der Schieberplatte 7 gegenüber dem Gehäusedeckel 3 ausgebildet und in den Fig. 10 und 11 näher dargestellt.

Auch bei dieser Variante ist die Schieberplatte 7 so ausgebildet, dass ihre schmalen Seiten ringsum einen solchen Abstand zum Gehäuse aufweisen, dass eine unterschiedliche Wärmeausdehnung von Schieberplatte 7 und Gehäuse 1 ungehindert möglich ist, und sind die Schieberplatte 7 und der Schieber 9 aus Keramik hergestellt. Schließlich ist zwischen Elektromagnet 20 und Gehäuse 1 eine O-Ringdichtung 26 vorgesehen, und sind die beiden Gehäusehälften 2, 3 mittels Schrauben 27 aneinander befestigt.

Die Ausgestaltung mit zusätzlichen Druckfedern 24, welche die Schieberplatte 7 auf eine zwischen den beiden Gehäuseteilen 2, 3 angeordnete Dichtungsplatte 25 drängen und so die Schieberplatte 7 im Gehäuse 1 halten, ist in derselben Weise auch bei den beiden zuvor beschriebenen Varianten des Schieberventils einsetzbar. Dasselbe gilt für die O-Ringdichtung 26 zwischen Antrieb 20 und Gehäuse 1 sowie die Befestigung der beiden Gehäusehälften 2, 3 aneinander mittels Schrauben 27.

Die zwischen den beiden Gehäuseteilen 2 und 3 eingesetzte Dichtungsplatte 25 besteht aus Metall und ist, wie in den Fig. 10 und 11 dargestellt, mit Sicken 28 versehen. Diese Sicken 28 sind derart angeordnet, dass die drei Durchflussöffnungen 17, 18 der Schieberplatte 7 gegeneinander sowie nach außen abgedichtet sind. Insbesondere ist hierfür eine äußere umlaufende Sicke 29, eine innere umlaufende Sicke 30 sowie zwei zwei gegenüberliegende Seiten der inneren umlaufenden Sicke 30 verbindende Sicken 31 vorgesehen. Damit kann durch diese einzige Dichtung sowohl die innere Dichtheit als auch die äußere Dichtheit des Ventils hergestellt werden.

Die Sicken 28 sind mit einer Beschichtung aus Gummi versehen, um die Oberflächenrauheit der Schieberplatte 7 und der Gehäuseteile 2, 3 auszugleichen. Grundsätzlich kann auch die gesamte Dichtungsplatte 25 beschichtet sein.

Die Funktionsweise des in den Fig. 7 bis 9 dargestellten Schieberventils ist derart, dass in der in Fig. 7 dargestellten Endstellung des Schiebers 9 die mittlere Durchflussöffnung 18 der Schieberplatte 7 über die Aushöhlung 19 des Schiebers 9 mit der in den Fig. 7 und 9 links angeordneten Durchflussöffnung 17 der Schieberplatte 7 verbunden ist, während die in den Fig. 7 und 9 rechts dargestellte Durchflussöffnung 17 der Schieberplatte vom Schieber 9 freigegeben ist und über den Innenraum 4 mit der Zugangsöffnung 5 verbunden ist. In der anderen Endstellung des Schiebers 9 ist entsprechend die mittlere Durchflussöffnung 18 der Schieberplatte 7 über die Aushöhlung 19 im Schieber 9 mit der rechts dargestellten Durchflussöffnung 17 der Schieberplatte 7 verbunden, während die links dargestellte Durchflussöffnung 17 der Schieberplatte 7 vom Schieber 9 freigegeben ist und mit der Zugangsöffnung 5 in Verbindung steht. Ein derartiges Ventil kann beispielsweise bei einer Klimaanlage eingesetzt werden, die alternativ zur Erwärmung oder Abkühlung eines Raumes dient und bei der hierfür die Fließrichtung des Fluids umgekehrt werden muss.

Bei allen Ausführungsvarianten ist durch die Verwendung von Keramik oder einem anderen reibungsarmen Material für die Schieberplatte 7 und den Schieber 9 eine leichte Betätigung des Ventils gewährleistet, während der Druckstift 12 eine gute Ventilfunktion unabhängig von der Einbaulage sicherstellt. Die Schieberplatte 7 ist bei allen Varianten bevorzugt im Gehäuse 1 schwimmend gehalten, indem sie lediglich durch die Druckfedern 24 gegen die Dichtungsplatte 25 gedrückt wird und ringsum zwischen ihren Schmalseiten und dem Gehäuse 1 einen Abstand aufweist. Damit werden Zug- und Druckspannungen bei wechselnder Temperatur vermieden. Das Schieberventil ist außerdem konstruktiv vorteilhaft und weist eine verhältnismäßig geringe Baugröße auf. Das Gehäuseoberteil 2 kann außerdem bei allen Varianten einteilig oder zweiteilig ausgebildet sein. Auch kann der Schieber 9 bei allen Varianten mit einer oder mehreren Aushöhlungen versehen sein, um das Gewicht zu reduzieren und die Flächenpressung zu erhöhen. Des Weiteren kann der Stößel 10 bei Verwendung eines Antriebsmotors auch als Gewindestange ausgebildet sein, wobei die zugehörige Gewindebohrung direkt in den Schieber 9 eingebracht sein kann.

### Bezugszeichenliste

- 1: Gehäuse
- 2: Gehäuseoberteil
- 2 a, b: Teil von 2
- 3: Gehäusedeckel
- 4: Innenraum von 1
- 5: Zugangsöffnung
- 6: Abgangsöffnung
- 7: Schieberplatte
- 8: Durchflussöffnung
- 9: Schieber
- 10: Stößel
- 11: Elektromotor
- 12: Druckstift
- 13: Druckfeder
- 14: Durchflussöffnung
- 15: Rohranschlussstück
- 16: Rohranschlussstück
- 17: Durchflussöffnung
- 18: Durchflussöffnung
- 19: Aushöhlung
- 20: Elektromagnet
- 21: Federhaltestift
- 22: Druckfeder
- 23: Buchse
- 24: Druckfeder
- 25: Dichtungsplatte
- 26: O-Ringdichtung
- 27: Befestigungsschraube
- 28: Sicke
- 29: Sicke
- 30: Sicke
- 31: Sicke

## Patentansprüche

1. Schieberventil, insbesondere für einen Kälte- und/oder Wärmekreislauf, mit einem Ventilgehäuse (1) mit Wänden, die mindestens eine Fluideintrittsöffnung (5) und mindestens eine Fluidaustrittsöffnung (6) aufweisen, sowie mit einem Schieber (9) zum zeitweisen Verschließen mindestens einer der Öffnungen (5, 6), wobei zwischen Schieber (9) und die zu verschließende Öffnung (6) aufweisender Gehäusewand eine mindestens eine Durchflussöffnung (8, 17, 18) für das Fluid aufweisende Platte (7) aus reibungsarmem Material oder mit einer dem Schieber (9) zugewandten reibungsarmen Oberfläche angeordnet ist,
**dadurch gekennzeichnet, dass**
die Schieberplatte (7) in der Plattenebene im Wesentlichen kräftefrei im Gehäuse (1) gehalten ist, indem die Schieberplatte (7) allein durch Mittel (24) im Gehäuse gehalten ist, welche die Schieberplatte (7) elastisch gegen die Innenseite der die zu verschließende Öffnung (6) aufweisenden Wand des Ventilgehäuses (1) drängen.

2. Schieberventil nach Anspruch 1,
**dadurch gekennzeichnet, dass**
der Schieber (9) und/oder die Schieberplatte (7) aus Keramik bestehen oder eine dem jeweils anderen Element (7, 9) zugewandte Oberfläche aus Keramik aufweisen.

3. Schieberventil nach Anspruch 1 oder 2,
**dadurch gekennzeichnet, dass**
Mittel (12, 13) vorgesehen sind, durch welche der Schieber (9), insbesondere elastisch, gegen die Schieberplatte (7) gedrängt wird.

4. Schieberventil nach einem der vorhergehenden Ansprüche,
**dadurch gekennzeichnet, dass**
zwischen der Schieberplatte (7) und der Innenseite der die zu verschließende Öffnung (6) aufweisenden Wand des Gehäuses (1) eine Dichtung (25) angeordnet ist, wobei die Dichtung (25) bevorzugt als metallische Dichtung, insbesondere als Dichtungsplatte mit Sicken (28), ausgebildet ist, wobei die Sicken (28) außerdem bevorzugt mit einer Beschichtung aus elastischem Dichtmaterial, insbesondere Gummi, versehen sind.

5. Schieberventil nach einem der vorhergehenden Ansprüche,
**dadurch gekennzeichnet, dass**
das Gehäuse (1) im Bereich der zu verschließenden Öffnung (6) quer zur Durchflussrichtung des Fluids geteilt ist und/oder dass das Gehäuse (1) insgesamt nur zwei Teile (2, 3) umfasst.

6. Schieberventil nach Anspruch 5,
**dadurch gekennzeichnet, dass**
zur Herstellung der inneren Dichtheit als auch der äußeren Dichtheit zwischen den beiden Hälften (2, 3) eine gemeinsame Dichtung (25) vorgesehen ist.

7. Schieberventil nach einem der vorhergehenden Ansprüche,
**dadurch gekennzeichnet, dass**
der Schieber (9) auf seiner der Schieberplatte (7) zugewandten Seite mindestens eine Aushöhlung (19) aufweist und/oder dass der Schieber (9) in Draufsicht U-förmig ausgebildet ist.

8. Schieberventil nach einem der vorhergehenden Ansprüche,
**dadurch gekennzeichnet, dass**
der Schieber (9) über einen Elektromotor (11) oder einen Elektromagneten (20) betätigbar ist und/oder dass auf den Schieber (9) eine Rückstelleinrichtung (22) wirkt und/oder dass die Bewegung des Schiebers (9) durch Anschläge (21, 23) begrenzt ist.

9. Schieberventil nach einem der vorhergehenden Ansprüche,
**dadurch gekennzeichnet, dass**
der Schieber (9) über einen als Gewindestange ausgebildeten Stößel (10) betätigbar ist und dass die entsprechende Gewindebohrung im eber (9) selbst vorgesehen ist, und/oder dass die Durchflussöffnungen (8, 17, 18) in der Schieberplatte (7) mindestens zum Teil in Schieberichtung schmal ausgebildet sind.

## Claims

1. A slide valve, in particular for a refrigeration circuit and/or a heat circuit, comprising a valve housing (1) with walls which have at least one fluid inlet aperture (5) and at least one fluid outlet aperture (6) as well as comprising a slider (9) for the closing at times of at least one of the apertures (5, 6), wherein a plate (7) made of low-friction material or having a low-friction surface facing the slider (9) and having at least one flow aperture (8, 17, 18) for the fluid is arranged between the slider (9) and the housing wall having the aperture (6) to be closed,
**characterized in that**
the slider plate (7) is held substantially force-free in the plane of the plate in the housing (1) **in that** the slider plate (7) is only held in the housing by means (24) which urge the slider plate (7) resiliently toward the inner side of the wall of the valve housing (1) having the aperture (6) to be closed.

2. A slide valve in accordance with claim 1, **characterized in that** the slider (9) and/or the slider plate (7) consists/consist of ceramic material or has/have a surface made of ceramic material facing the other respective element (7, 9).

3. A slide valve in accordance with claim 1 or claim 2, **characterized in that** means (12, 13) are provided by which the slider (9) is urged, in particular resiliently urged, toward the slider plate (7).

4. A slide valve in accordance with any one of the preceding claims, **characterized in that** a seal (25) is arranged between the slider plate (7) and the inner side of the wall of the housing (1) having the aperture (6) to be closed, wherein the seal (25) is preferably made as a metal seal, in particular as a sealing plate with beads (28), wherein the beads (28) are additionally preferably provided with a coating of resilient sealing material, in particular rubber.

5. A slide valve in accordance with any one of the preceding claims, **characterized in that** the housing (1) is divided transversely to the flow direction of the fluid in the region of the aperture (6) to be closed; and/or **in that** the housing (1) only includes two parts (2, 3) in total.

6. A slide valve in accordance with claim 5, **characterized in that** a common seal (25) is provided between the two halves (2, 3) to establish both the inner leak tightness and the outer leak tightness.

7. A slide valve in accordance with any one of the preceding claims, **characterized in that** the slider (9) has at least one cavity (19) at its side facing the slider plate (7); and/or **in that** the slider (9) is made in U shape in plan view.

8. A slide valve in accordance with any one of the preceding claims, **characterized in that** the slider (9) is actuable via an electric motor (11) or via an electromagnet (20); and/or **in that** a resetting device (22) acts on the slider (9); and/or **in that** the movement of the slider (9) is bounded by abutments (21, 23).

9. A slide valve in accordance with any one of the preceding claims, **characterized in that** the slider (9) is actuable via a tappet (10) formed as a threaded bar; and **in that** the corresponding threaded bore is provided in the actual slider (9); and/or **in that** the flow apertures (8, 17, 18) in the slider plate (7) are made narrow at least in part in the sliding direction.

## Revendications

1. Vanne à tiroir, en particulier pour un cycle frigorifique et/ou thermique, comportant un boîtier de vanne (1) pourvu de parois qui présentent au moins une ouverture d'entrée de fluide (5) et au moins une ouverture de sortie de fluide (6), et comportant un tiroir (9) pour l'obturation temporaire de l'une au moins des ouvertures (5, 6), dans laquelle une plaque (7) présentant au moins une ouverture de passage (8, 17, 18) pour le fluide et constituée d'un matériau à faible friction ou pourvue d'une surface à faible friction tournée vers le tiroir (9) est agencée entre le tiroir (9) et la paroi de boîtier présentant l'ouverture (6) à obturer,
**caractérisée en ce que**
la plaque à tiroir (7) est maintenue dans le boîtier (1) dans le plan de plaque sensiblement sans force du fait que la plaque à tiroir (7) est maintenue dans le boîtier uniquement par des moyens (24) qui poussent la plaque à tiroir (7) élastiquement contre le côté intérieur de la paroi du boîtier de vanne (1) présentant l'ouverture (6) à obturer.

2. Vanne à tiroir selon la revendication 1,
**caractérisée en ce que**
le tiroir (9) et/ou la plaque à tiroir (7) sont constitués en céramique ou présentent une surface en céramique tournée vers l'autre élément respectif (7, 9).

3. Vanne à tiroir selon la revendication 1 ou 2,
**caractérisée en ce que**
il est prévu des moyens (12, 13) par lesquels le tiroir (9) est poussé contre la plaque à tiroir (7) en particulier avec effet élastique.

4. Vanne à tiroir selon l'une des revendications précédentes,
**caractérisée en ce que**
un joint d'étanchéité (25) est agencé entre la plaque à tiroir (7) et le côté intérieur de la paroi du boîtier (1) présentant l'ouverture (6) à obturer, le joint (25) étant réalisé de préférence sous forme de joint métallique, en particulier sous forme de plaque d'étanchéité à moulures (28), les moulures (28) étant pourvues en outre de préférence d'un revêtement d'un matériau d'étanchéité élastique, en particulier de caoutchouc.

5. Vanne à tiroir selon l'une des revendications précédentes,
**caractérisée en ce que**
le boîtier (1) est subdivisé dans la zone de l'ouverture (6) à obturer transversalement à la direction d'écoulement du fluide et/ou **en ce que** le boîtier (1) comprend dans l'ensemble uniquement deux parties (2, 3).

6. Vanne à tiroir selon la revendication 5,
**caractérisée en ce que**
pour établir l'étanchéité interne et également l'étanchéité externe, il est prévu un joint commun (25) entre les deux moitiés (2, 3).

7. Vanne à tiroir selon l'une des revendications précédentes,
**caractérisée en ce que**
le tiroir (9) comprend sur son côté tourné vers la plaque à tiroir (7) au moins un creux (19) et/ou **en ce que** le tiroir (9) est réalisé en forme de U, en vue de dessus.

8. Vanne à tiroir selon l'une des revendications précédentes,
**caractérisée en ce que**
le tiroir (9) est actionnable par un moteur électrique (11) ou par un aimant électrique (20) et/ou **en ce qu'**un dispositif de rappel (22) agit sur le tiroir (9) et/ou **en ce que** le mouvement du tiroir (9) est limité par des butées (21, 23).

9. Vanne à tiroir selon l'une des revendications précédentes,
**caractérisée en ce que**
le tiroir (9) est actionnable par un poussoir (10) réalisé sous forme de tige filetée, et **en ce que** le perçage taraudé correspondant est prévu dans le tiroir (9) lui-même, et/ou **en ce que** les ouvertures de passage (8, 17, 18) dans la plaque à tiroir (7) sont réalisées au moins en partie sous forme étroite en direction de poussée.
